# EUROPÄISCHE PATENTANMELDUNG

(11) **EP 4 653 247 A1**
(43) Veröffentlichungstag der Anmeldung: **26.11.2025**
(21) Anmeldenummer: 25000038.7
(22) Anmeldetag: 08.04.2025
(51) Int. Cl.: B60L 53/16, H01R 13/639

(54) **LADEBUCHSE FÜR EIN ELEKTROFAHRZEUG**

(30) Priorität: 21.05.2024 DE 102024114115
(71) Anmelder: HARTING Automotive GmbH, 32339 Espelkamp (DE)
(72) Erfinder: KIPP, Tobias, 49549 Ladbergen (DE); BEIMDIECK, Carsten, 49479 Ibbenbüren (DE); ITERMANN, Eugen, 32312 Lübbecke (DE)

(57) **Zusammenfassung**

Die Erfindung betrifft eine Ladebuchse (1) zur Aufnahme eines Ladesteckverbinders und zum Einbau in ein Elektrofahrzeug oder in eine Energieversorgungseinheit für ein Elektrofahrzeug, wobei die Ladebuchse (1) ein Halteelement (2) aufweist, an welchem eine Verriegelungseinheit (8), zur Fixierung des Ladesteckverbinders während des Ladevorgangs, montierbar ist, und wobei das Halteelement (2) an der Ladebuchse (1) verrastbar ist.

## Beschreibung

Die Erfindung geht aus von einer Ladebuchse für ein Elektrofahrzeug nach der Gattung des unabhängigen Anspruchs 1. Die Erfindung betrifft weiterhin ein System, bestehend aus einer solchen Ladebuchse, einer Verriegelungseinheit und einem Ladesteckverbinder nach Anspruch 9.

Derartige Ladebuchsen sind zum Aufladen von Elektrofahrzeugen, insbesondere zum Laden von Elektro-PKW im privaten Umfeld, vorgesehen. In die Ladebuchsen werden Ladesteckverbinder zum Laden der im Elektrofahrzeug befindlichen Batterien eingesteckt.

### Stand der Technik

In der DE 10 2022 114 331 A1 wird ein Ladevorgang eines Elektro-PKW beschrieben.

Zum Aufladen von Elektrofahrzeugen werden Ladekabel eingesetzt. Derartige Ladekabel, die insbesondere im privaten Umfeld zum Laden von Elektrofahrzeugen benutzt werden, bestehen in der Regel aus einem elektrischen Ladekabel, dessen Enden jeweils an einen Ladesteckverbinder angeschlossen sind. Zum Aufladen von dem Elektrofahrzeug wird ein Steckverbinder in eine Ladebuchse einer Energieversorgungseinheit, beispielsweise einer heimische Wallbox eingesteckt und der andere Steckverbinder wird in eine Ladebuchse des Elektrofahrzeugs eingesteckt. Anstatt in einer Wallbox kann der Steckverbinder auch in eine Buchse einer externen Ladestation bzw. Ladesäule eingesteckt werden. Über das Ladekabel wird dann ein entsprechender Ladestrom für die Batterie bzw. den Akku des Elektrofahrzeugs bereitgestellt.

Bei einem Ladevorgang fließen häufig hohe elektrische Ladeströme. Um ein versehentliches Herausziehen des Ladesteckverbinders zu vermeiden, wird der Ladesteckverbinder während des Ladevorgangs an der Ladebuchse fixiert. Hierfür sind in der Ladebuchse so genannte Verriegelungseinheiten vorgesehen.

Am Markt sind unterschiedliche Verriegelungseinheiten bekannt. Die DE 10 2010 045 685 A1 zeigt beispielsweise eine Verriegelungseinheit, die den Ladesteckverbinder während des Ladevorgangs an der Ladebuchse fixiert. Die Ladebuchsen müssen an die jeweilige Ausführung der Verriegelungseinheit angepasst werden.

### Aufgabenstellung

Die Aufgabe der Erfindung besteht darin, eine einfach aufgebaute und kostengünstig herstellbare Ladebuchse vorzuschlagen.

Die Aufgabe wird durch den Gegenstand der unabhängigen Ansprüche gelöst.

Die erfindungsgemäße Ladebuchse ist zur Aufnahme eines Ladesteckverbinders vorgesehen. Das bedeutet, dass in die Ladebuchse ein Ladesteckverbinder einsteckbar ist.

Die Ladebuchse ist zum Einbau in ein Elektrofahrzeug oder in eine Energieversorgungseinheit für ein Elektrofahrzeug vorgesehen. Bei der Energieversorgungseinheit handelt es sich beispielsweise um eine so genannte Wallbox oder um eine externe Ladestation.

Die erfindungsgemäße Ladebuchse weist ein Halteelement auf. Auf dem Halteelement ist eine beliebige Verriegelungseinheit montierbar. Die Verriegelungseinheit dient dazu einen Ladesteckverbinder während des Ladevorgangs an der Ladebuchse zu fixieren, um ein versehentliches Herausziehen des Steckverbinders zu verhindern.

Erfindungsgemäß ist das Halteelement am Gehäuse der Ladebuchse vorzugsweise außenseitig verrastbar.

Erfindungsgemäß wird auf das Halteelement eine Verriegelungseinheit montiert. Vorzugsweise können auf das Haltelement gleichermaßen unterschiedliche Verriegelungseinheiten montiert werden. So kann jeder Kunde bzw. Hersteller von Elektroautos bzw. Energieversorgungseinheiten die gleiche Ladebuchse mit seiner individuellen Verriegelungseinheit ausstatten.

Die Ladebuchse weist ein Kunststoffgehäuse mit einem im wesentlichen zylinderförmigen Innenabschnitt auf. Der Innenabschnitt befindet sich innerhalb des Elektrofahrzeugs oder des Gehäuses der Energieversorgungseinheit bzw. ragt dort hinein.

Das Kunststoffgehäuse der Ladebuchse weist außerdem einen umlaufenden Flanschabschnitt auf, der zur Montage der Ladebuchse am Elektrofahrzeug oder an einer Wand der Energieversorgungseinheit vorgesehen ist.

Vorzugsweise sind am Innenabschnitt der Ladebuchse Rastnasen angeformt. Vorzugsweise weist das Halteelement Rastausnehmungen auf, die mit den Rastnasen derart zusammenwirken, dass das Halteelement am Gehäuse der Ladebuchse außenseitig verrastbar ist. Diese Art der Verrastung ist einfach und kostengünstig realisierbar.

Vorteilhafterweise weist das Halteelement Gewindeöffnungen zur Fixierung der Verriegelungseinheit auf dem Halteelement auf. Alternativ zu den Gewindeöffnungen können auch Durchgangsöffnungen für selbstschneidende Schrauben vorgesehen sein. Die Verriegelungseinheit kann einfach und stabil an dem Haltelement angebracht werden. Dabei können unterschiedliche Verriegelungseinheiten dieselben, mit den Gewindeöffnungen korrelierenden, Schrauböffnungen aufweisen.

Vorzugsweise weist das Halteelement eine Durchgangsöffnung für einen Verriegelungsdorn der Verriegelungseinheit auf. Vorzugsweise weist auch der Innenabschnitt der Ladebuchse eine Durchgangsöffnung für einen Verriegelungsdorn der Verriegelungseinheit auf. Vorteilhaft ist es, wenn die Durchgangsöffnungen des Halteelements und des Innenabschnitts der Ladebuchse - im zusammengebauten Zustand - zueinander korrelieren. In diesem Fall kann der oben erwähnte Verriegelungsdorn der Verriegelungseinheit durch die Durchgangsöffnungen greifen bzw. sich darin hindurch - von einem verriegelnden in einen entriegelnden Zustand - hin und her bewegen.

Ein erfindungsgemäßes System besteht aus einer wie oben beschriebenen Ladebuchse, einer Verriegelungseinheit und einem Ladesteckverbinder.

Der Ladesteckverbinder weist an einem Steckabschnitt eine Durchgangsöffnung auf, die im gesteckten Zustand vorzugsweise mit den Durchgangsöffnungen des Halteelements und des Innenabschnitts der Ladebuchse korreliert. Der oben erwähnte Verriegelungsdorn kann demnach - im gesteckten Zustand - durch alle drei Durchgangsöffnungen hindurchgreifen und sich entsprechend hin und her bewegen.

Der Verriegelungsdorn der Verriegelungseinheit ragt während des Ladevorgangs durch die Durchgangsöffnungen des Halteelements, des Innenabschnitts der Ladebuchse und des Ladesteckverbinders hindurch. Dadurch ist der Ladesteckverbinder an der Ladebuchse fixiert. Vorteilhafterweise ist der Verriegelungsdorn - im nicht ladenden Zustand - in den Durchgangsöffnungen des Halteelements und des Innenabschnitts angeordnet und greift lediglich - im Ladezustand - durch die weitere Durchgangsöffnung des Ladesteckverbinders durch.

Wenn der Ladevorgang beendet und die Steckverbindung entsprechend spannungsfrei ist, wird der Verriegelungsdorn aus den Durchgangsöffnungen herausgezogen und der Ladesteckverbinder kann aus der Ladebuchse herausgezogen werden.

Vorteilhafte Ausgestaltungen der Erfindung sind in den Unteransprüchen und der folgenden Beschreibung angegeben.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Explosionsdarstellung einer erfindungsgemäßen Ladebuchse,
- Fig. 2: eine perspektivische Darstellung eines Halteelements der erfindungsgemäßen Ladebuchse und

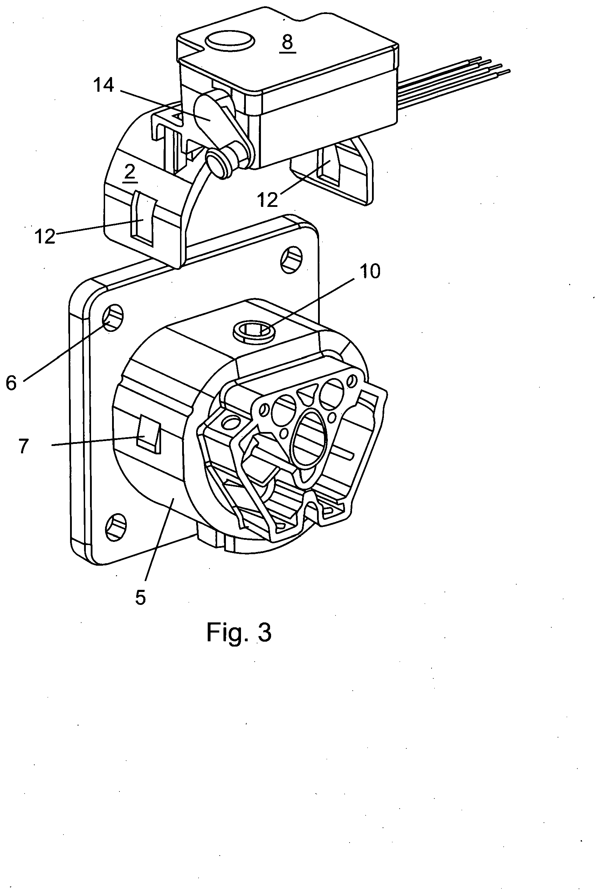

- Fig. 3: eine weitere perspektivische Explosionsdarstellung der erfindungsgemäßen Ladebuchse.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

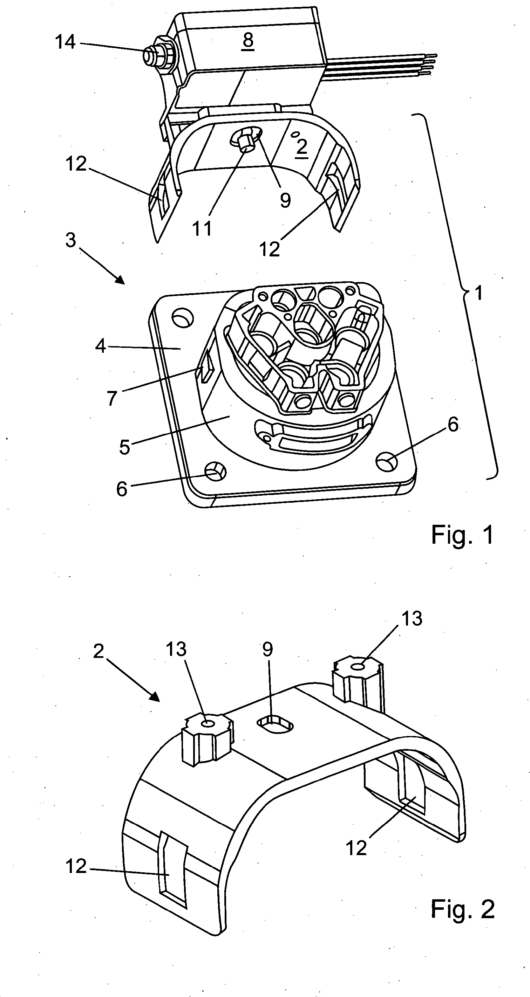

Die Figur 1 zeigt eine perspektivische Explosionsdarstellung einer erfindungsgemäßen Ladebuchse 1.

Die Ladebuchse 1 ist zur Aufnahme eines Ladesteckverbinders vorgesehen. Der Ladesteckverbinder ist hier aus darstellerischen Gründen nicht gezeigt. Die Ladebuchse 1 wird in der Regel in eine Energieversorgungseinheit für ein Elektrofahrzeug, vorzugsweise in einer so genannten Wallbox, eingebaut. Die Wallbox wird hier aus darstellerischen Gründen ebenfalls nicht gezeigt.

Die Ladebuchse 1 weist ein Kunststoffgehäuse 3 auf, welches einen umlaufenden, flächigen Flanschabschnitt 4 und einen zylinderförmigen Innenabschnitt 5 aufweist.

Der Flanschabschnitt 4 weist Schrauböffnungen 6 auf, über welche er beispielweise an einen entsprechende Durchbruchsöffnung einer Wallbox befestigbar ist.

Der zylinderförmige Innenabschnitt 5 der Ladebuchse 1 weist radial abstehende Rastnasen 7 auf.

Die Ladebuchse 1 weist ein Halteelement 2 auf, an welchem eine Verriegelungseinheit 8 montiert ist. Das Halteelement 2 weist eine Durchgangsöffnung 9 auf, welche - im zusammengebauten Zustand - mit einer Durchgangsöffnung 10 im Innenabschnitt 5 der Ladebuchse 1 korreliert.

Das Halteelement 2 ist im Wesentlichen bogenförmig ausgestaltet und damit der Außenform des Innenabschnitts 5 der Ladebuchse 2 nachempfunden. Das Halteelement 2 weist an seinen Enden jeweils eine Rastausnehmung 12 auf. Die Rastausnehmungen 12 greifen - im zusammengebauten Zustand - über die Rastnasen 7 des Innenabschnitts 5, wodurch das Haltelement 2 mit dem Kunststoffgehäuse 3 verrastet ist.

Das Haltelement 2 ist in Figur 2 separat dargestellt. Das Halteelement 2 weist Gewindeöffnungen 13 auf, über welche eine Verriegelungseinheit 8 am Halteelement 2 fixierbar ist. Über das Halteelement 2 kann schließlich die Verriegelungseinheit 8 an den Kunststoffkörper 3 der Ladebuchse 1 montiert werden.

Die Verriegelungseinheit 8 weist einen Verriegelungsdorn 11 auf. Der Verriegelungsdorn 11 kann - im zusammengebauten Zustand - durch die Durchgangsöffnungen 9, 10 hindurchragen und sich, über eine in der Verriegelungseinheit 8 integrierte Mechanik, darin hin und herbewegen.

Ein Ladesteckverbinder (nicht gezeigt) hat ebenfalls eine Durchgangsöffnung, die im eingesteckten Zustand mit den Durchgangsöffnungen 9, 10 der Ladebuchse 2 korreliert. Befindet sich der Verriegelungsdorn 11 in seiner ausgefahrenen Position, durchragt er alle drei Durchgangsöffnungen und der Ladesteckverbinder kann nicht aus der Ladebuchse 2 herausgezogen werden. Befindet sich der Verriegelungsdorn 11 in seiner eingefahrenen Position, sind alle drei Durchgangsöffnungen 9, 10 frei und der Ladesteckverbinder kann aus der Ladebuchse 2 herausgezogen werden.

Bei einem Stromausfall kann der Verriegelungsdorn 11 über eine Kurbel 14 der Verriegelungseinheit 8 händisch eingefahren werden, so dass der Ladesteckverbinder auch in dieser Situation aus der Ladebuchse 2 herausgezogen werden kann.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Ladebuchse
- 2: Halteelement
- 3: Kunststoffgehäuse
- 4: Umlaufender Flanschabschnitt
- 5: Zylinderförmiger Innenabschnitt
- 6: Schrauböffnung
- 7: Rastnase
- 8: Verriegelungseinheit
- 9: Durchgangsöffnung des Halteelements 2
- 10: Durchgangsöffnung des Innenabschnitts 5
- 11: Verriegelungsdorn
- 12: Rastausnehmung
- 13: Gewindeöffnung
- 14: Kurbel

## Patentansprüche

1. Ladebuchse (1) zur Aufnahme eines Ladesteckverbinders und zum Einbau in ein Elektrofahrzeug oder in eine Energieversorgungseinheit für ein Elektrofahrzeug,
wobei die Ladebuchse (1) ein Halteelement (2) aufweist, an welchem eine Verriegelungseinheit (8), zur Fixierung des Ladesteckverbinders an der Ladebuchse (1), montierbar ist
und wobei das Halteelement (2) an der Ladebuchse (1) lösbar verbunden oder verrastbar ist.

2. Ladebuchse (1) nach Anspruch 1
**dadurch gekennzeichnet, dass**
die Ladebuchse (1) ein Kunststoffgehäuse (3) aufweist, welches einen umlaufenden Flanschabschnitt (4) aufweist, der zur Montage der Ladebuchse (1) am Elektrofahrzeug oder an einer Wand der Energieversorgungseinheit vorgesehen ist.

3. Ladebuchse (1) nach einem der vorstehenden Ansprüche **dadurch gekennzeichnet, dass**
die Ladebuchse (1) einen im wesentlichen zylinderförmigen Innenabschnitt (5) aufweist, der in das Elektrofahrzeug oder das Gehäuse der Energieversorgungseinheit hineinragt.

4. Ladebuchse (1) nach vorstehendem Anspruch
**dadurch gekennzeichnet, dass**
an dem Innenabschnitt (5) der Ladebuchse (1) Rastnasen (7) angeformt sind.

5. Ladebuchse (1) nach vorstehendem Anspruch
**dadurch gekennzeichnet, dass**
das Halteelement (2) Rastausnehmungen (12) aufweist, die mit den Rastnasen (7) derart zusammenwirken, dass das Halteelement (2) am Kunststoffgehäuse (3) der Ladebuchse (1) lösbar verbindbar oder verrastbar ist.

6. Ladebuchse (1) nach einem der vorstehenden Ansprüche
**dadurch gekennzeichnet, dass**
das Halteelement (2) Gewindeöffnungen (13) oder Durchgangsöffnungen für selbstschneidende Schrauben zur Fixierung der Verriegelungseinheit (8) aufweist.

7. Ladebuchse (1) nach einem der vorstehenden Ansprüche **dadurch gekennzeichnet, dass**
das Halteelement (2) eine Durchgangsöffnung (9) für einen Verriegelungsdorn (11) der Verriegelungseinheit (8) aufweist.

8. Ladebuchse (1) nach einem der vorstehenden Ansprüche
**dadurch gekennzeichnet, dass**
der Innenabschnitt (5) der Ladebuchse (1) eine Durchgangsöffnung (10) für einen Verriegelungsdorn (11) der Verriegelungseinheit (8) aufweist.

9. Ladebuchse (1) nach einem der beiden vorstehenden Ansprüche **dadurch gekennzeichnet, dass**
die Durchgangsöffnungen (9, 10) des Halteelements (2) und des Innenabschnitts (5) der Ladebuchse zueinander korrelieren.

10. System bestehend aus einer Ladebuchse (1) nach einem der vorstehenden Ansprüche, einer Verriegelungseinheit (8) und einem Ladesteckverbinder.

11. System nach vorstehendem Anspruch
**dadurch gekennzeichnet, dass**
der Ladesteckverbinder an einem Steckabschnitt eine Durchgangsöffnung aufweist, die im gesteckten Zustand mit den Durchgangsöffnungen (9, 10) des Halteelements (2) und des Innenabschnitts (5) der Ladebuchse (1) korreliert und
dass die Verriegelungseinheit (8) einen Verriegelungsdorn (11) aufweist, der während des Ladevorgangs durch die Durchgangsöffnungen (9, 10) des Halteelements (2), des Innenabschnitts (5) der Ladebuchse (1) und des Ladesteckverbinders hindurchragt und dadurch den Ladesteckverbinder an der Ladebuchse (1) fixiert ist.
